# EUROPEAN PATENT SPECIFICATION

(11) **EP 4 470 339 B1**
(45) Date of publication and mention of the grant of the patent: **17.12.2025**
(21) Application number: 23703303.0
(22) Date of filing: 26.01.2023
(51) Int. Cl.: H05B 3/14, H05B 3/84

(54) **SENSOR BRACKET GLAZING**
VERGLASUNG MIT SENSORHALTER
VITRAGE AVEC SUPPORT DE CAPTEUR

(30) Priority: 26.01.2022 EP 22425002
(43) Date of publication of application: 04.12.2024
(73) Proprietor: Pilkington Group Limited, Lathom Nr. Ormskirk Lancashire L40 5UF (GB)
(72) Inventor: PIGUZZI, Camillo, 10132 Torino (IT)
(74) Representative: Denno, Richard Christopher Somer
(86) International application number: PCT/GB2023/050179
(87) International publication number: WO 2023/144546

(56) References cited:
- WO-A1-2021/040055
- WO-A1-2021/246326
- JP-B2- 6 558 262

## Description

This invention relates to a glazing suitable for a sensor, a method of manufacturing the same and use of the same. The glazing is a vehicle window having a sensor bracket.

Glazings for a sensor comprising a glass sheet and a bracket on the glass sheet for mounting the sensor are known. A heating element for defogging or defrosting a heated region on the glazing, allows the sensor to receive electromagnetic radiation such as visible light or radio frequencies through the heated region. The heated region heats faster than the rest of the glazing so useful data from the sensor is available sooner. Autonomous vehicles and vehicles with advanced driver assistance systems rely on camera data so these vehicles are typically fitted with glazing for a camera with an electric heating element on the glazing.

WO2006077149A1 (Baranski) describes a retaining socket for detachable fixing of a built-in part, for example a rain sensor, to a glass pane. The built-in part is supplied with energy via supply lines on the glass pane. Energy supply on the glass surface to a heating element is provided by a permanent connecting technique, such as soldering. WO2021040055A1 (Chiba), WO2021246326A1 (Ichida), JP6558262B2 (Futatsugi) are relevant background art.

Prior art glazings having electrical connections, such as solder connections or adhesive tape patches, are expensive to manufacture. Difficulties of accurately positioning components of the electrical connections result in slow cycle times for assembly of the bracket on the glass sheet.

A first need is for an alternative glazing comprising a bracket and a heating element with improved electrical connection which is a solution to a problem of easy, fast, and accurate positioning of the electrical connection. Such a glazing would overcome the shortfalls of the prior art, providing an electrical connection accurately positioned relative to the bracket and the heating element.

According to a first aspect of the present invention there is provided a glazing for a sensor, an inner glass sheet for facing the sensor, a print layer on a surface of the glazing, an opening in the print layer for the sensor to sense via the glazing, a contact pad on the inner glass sheet, a heating element for heating the opening electrically connected to the contact pad, an adhesive layer bonded to a part of the inner glass sheet, a bracket for the sensor bonded to the adhesive layer, a sensor hole in the bracket for positioning the sensor, a spring contact biased against the contact pad by the adhesive layer and attached to a connector for supplying electrical power from a power source wherein the spring contact and/or the connector is moulded in, or clipped to, the bracket.

The invention is greatly advantageous because a glazing having a spring contact biased against a contact pad and attached to a connector moulded in, or clipped to, a bracket replaces a conventional soldered connection. The invention eliminates the risks of failure in service of a lead-free solder connection.

Supplying electrical power via a connector attached to the bracket results in an unexpected synergy that the bracket also protects a spring contact attached to the connector. As a result, the invention provides a reliable electrical connection at lower cost than conventional solder connections or adhesive tape patches.

Preferably, the glazing further comprises an outer glass sheet bonded to the inner glass sheet by a ply of interlayer material.

Preferably, the sensor hole at least partly overlaps the opening in the print layer.

Preferably, the heating element at least partly overlaps the opening in the print layer.

Preferably, the connector at least partly overlaps the adhesive layer.

Preferably, the glazing further comprises a spring contact hole in the bracket for positioning the spring contact.

Preferably, the glazing further comprises a cap for covering the spring contact hole.

Preferably, the glazing further comprises a clip for clipping the spring contact to the bracket.

Preferably, the bracket has thickness 6 mm or less, more preferably 4 mm or less, most preferably 2 mm or less. Reduced thickness of the bracket is advantageous to save cost and to allow flexing of the bracket during assembly of the bracket on the glass sheet.

Preferably, the heating element is selected from a conductive coating, conductive tracks, conductive wires, or a combination thereof.

Preferably, the heating element is conductive tracks comprising silver print, silver nanowires, carbon nanotubes, graphene, silver powder, silver spheres, graphite powder, graphite rods, carbon nanotubes or glass flakes having a conductive coating or is printed using sprayed particles or is shaped as strip or braid comprising copper. More preferably, the heating element is conductive wires comprising copper, tungsten, or silver.

Preferably, a power density in the heating element is in a range from 100 to 3,000 W/m², more preferably from 200 to 1,000 W/m², most preferably from 300 to 600 W/m².

A second need is for a corresponding method of manufacturing which is simple and has reduced cycle time for assembly of the bracket on the glass sheet.

According to a second aspect of the present invention, there is provided a method for manufacturing a glazing for a sensor, according to the first aspect of the present invention, comprising steps: providing an inner glass sheet for facing the sensor, printing a print layer on a surface of the glazing, forming an opening in the print layer for the sensor to sense via the glazing, printing a contact pad on the inner glass sheet, forming a heating element for heating the opening electrically connected to the contact pad, bonding an adhesive layer to a part of the inner glass sheet, bonding a bracket for the sensor to the adhesive layer, forming a sensor hole in the bracket for positioning the sensor, providing a spring contact biased against the contact pad by the adhesive layer and attached to a connector for supplying electrical power from a power source wherein the spring contact and/or the connector is moulded in, or clipped to, the bracket.

The connector moulded in, or clipped to, the bracket surprisingly makes accurate positioning of the spring contact on the contact pad easier and faster. Cycle time for assembly of the bracket on the glass sheet is thus reduced.

Preferably, the step of bonding the bracket for the sensor to the adhesive layer and the step of providing the spring contact biased against the contact pad by the adhesive layer occur simultaneously. By simultaneously bonding the bracket to the adhesive layer and providing the spring contact biased against the contact pad by the adhesive layer, cycle time for assembly of the bracket on the glass sheet is further reduced.

A third need is that the alternative glazing should meet test requirements for defogging or defrosting a vehicle window in a sensor system for faster availability of useful data from the sensor mounted on the bracket.

According to a third aspect of the present invention, there is provided use of the glazing, according to the first aspect of the present invention, as a windshield, a rear window, a side window, or a roof window of a motor vehicle, for a sensor system to enable an autonomous vehicle or a vehicle with an advanced driver assistance system.

A result of the invention is that the glazing meets industrial test requirements for defogging and defrosting, for example of a vehicle window having a camera. The invention also meets test requirements for a glazing serving as a vehicle windshield in a camera system to enable an autonomous vehicle or a vehicle with an advanced driver assistance system. The improved electrical connection according to the present invention has lower resistance than conventional electrical connections, so more electrical power is available to the heating element. Defogging and defrosting is thereby faster, so useful data from the sensor is available sooner.

The invention will now be further disclosed by non-limiting drawings.
Fig. 1 is an embodiment of the invention having the spring contact and/or the connector moulded in the bracket.
Fig. 2 is a cross-section on the line A-A of Fig. 1.
Fig. 3 is an embodiment of the invention having a spring contact hole and a clip.
Fig. 4 is a cross-section on the line A-A of Fig. 3.
Fig. 5 is an embodiment of the invention as Fig. 3 and having a cap.
Fig. 6 is a cross-section on the line A-A of Fig. 5.
Fig. 7 is a cross-section as Fig. 6 but the print layer is on surface S2.
Fig. 8 is a cross-section as Fig. 7 having print layers on surfaces S2 and S4.

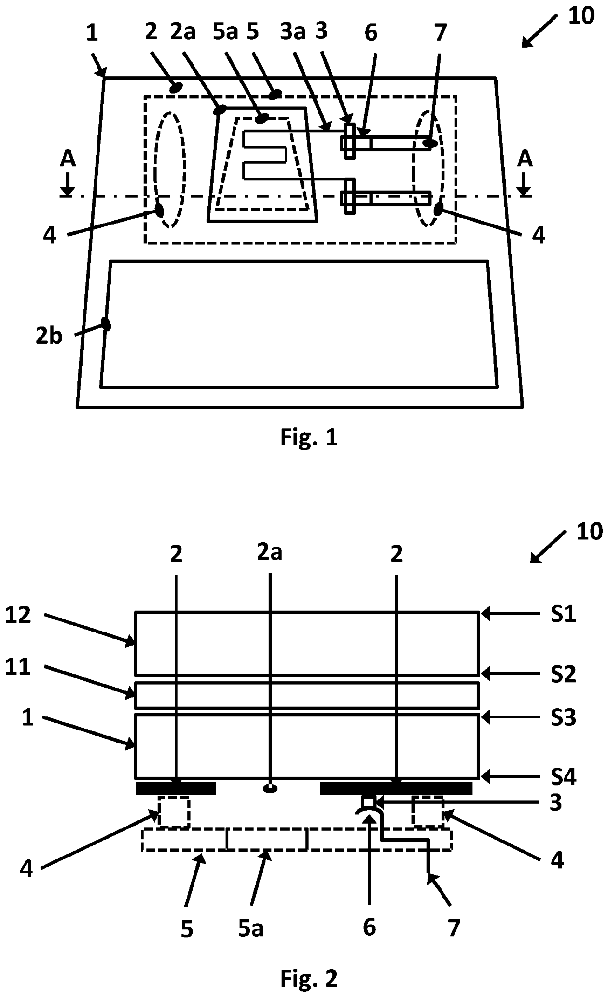

Fig. 1 discloses a glazing (10) for a sensor according to the invention comprising an inner glass sheet (1) for facing the sensor. Optionally, an outer glass sheet (12) is bonded to the inner glass sheet (1) by a ply of interlayer material (11).

The inner glass sheet (1) and the outer glass sheet (12) are preferably soda lime silica glass, manufactured using the float process. Glass thickness is preferably in a range from 2 to 12 mm. The inner glass sheet (1) or the outer glass sheet (12) may be toughened glass with surface stress greater than 65 MPa, or heat strengthened glass with surface stress in a range from 40 to 55 MPa, or semi-toughened with surface stress in a range from 20 to 25 MPa, or annealed glass. The interlayer material (11) is any thermoplastic resin, preferably polyvinyl butyral (PVB).

A print layer (2) is printed on an inner surface (S2) of the outer sheet (12) and/or on an inner surface (S4) of the inner glass sheet (1).

The print layer (2) may comprise a black enamel deposited by screen printing black ink in a selected region on the inner glass sheet (1) or the outer glass sheet (12). The inner glass sheet (1) or the outer glass sheet (12) is then baked at a predetermined temperature to make the printed ink into a hard enamel. Advantageously, the print layer (2) extends around a periphery of the glazing (10) to mask an adhesive material, such as polyurethane (PU), used to bond the glazing (10) to a vehicle body (not shown).

An opening (2a) is arranged in the print layer (2) for the sensor to sense via the glazing (10). The sensor may be a camera, an RFID tag, or any electronic device to transmit and receive electromagnetic radiation, such as visible light or radio frequencies. For example, vehicle windows allow data acquisition for toll collection, or for Advanced Driver Assistance Systems (ADAS) to assist drivers in driving and parking functions. The sensor is mounted on a bracket (5) on a surface of the inner glass sheet (1). Optionally, a larger opening (2b) is formed in the print layer (2) for example as a vision area for a driver of a vehicle.

A contact pad (3) is provided on the inner glass sheet (1). The contact pad (3) is typically printed using a silver-containing ink. The contact pad (3) may be printed on the print layer (2) adjacent the opening (2a) as shown. Advantageously, the print layer (2) masks the contact pad (3) from view.

A heating element (3a) for heating the opening (2a) is provided on a first surface of the inner glass sheet (1) and is electrically connected to the contact pad (3). The heating element (3a) is typically conductive lines comprising silver print. The contact pad (3) and the heating element (3a) may comprise the same material and may be printed simultaneously. The heating element (3a) extends adjacent to or in the opening (2a).

An adhesive layer (4) is bonded to a part of the inner glass sheet (1). The adhesive layer (4) may be applied to the inner glass sheet (1), or to a bracket (5). The bracket (5) is then pressed towards the inner glass sheet (1). A plurality of adhesive layers (4) may bond the bracket (5) to the inner glass sheet (1), for example two adhesive layers (4) as shown. The plurality of adhesive layers (4) may form a dashed line. The adhesive layer (4) may be polyurethane (PU).

The bracket (5) for the sensor is bonded to the adhesive layer (4) and allows the sensor to be mounted securely on the inner glass sheet (1). A sensor hole (5a) formed in the bracket (5) is for positioning the sensor for example concentric with the opening (2a) in the print layer (2). The bracket (5) may be made of a metal such as steel or aluminium, or a plastic such as polybutylene terephthalate (PBT), optionally blended with polycarbonate (PC), acrylonitrile styrene acrylate (ASA), acrylonitrile styrene (SAN), polyamide (PA) or any combination thereof, or polyetherimide (PEI). The plastic is preferably a thermoplastic material suitable for injection moulding.

A spring contact (6) is biased against the contact pad (3) by the adhesive layer (4) and attached to a connector (7) for suppling electrical power from a power source.

Fig. 2 discloses a cross-section on the line A-A of Fig. 1 of the glazing (10) according to the invention. In this embodiment the spring contact (6) and the connector (7) are moulded in the bracket (5). The sensor hole (5a) is concentric with the opening (2a). Two adhesive layers (4) are positioned to provide bonding on each side of the spring contact (6) to maintain a biassing force against the contact pad (3) and avoid fretting.

Optionally, the inner glass sheet (1) and an outer glass sheet (12) are bonded together by a ply of interlayer material (11) as shown.

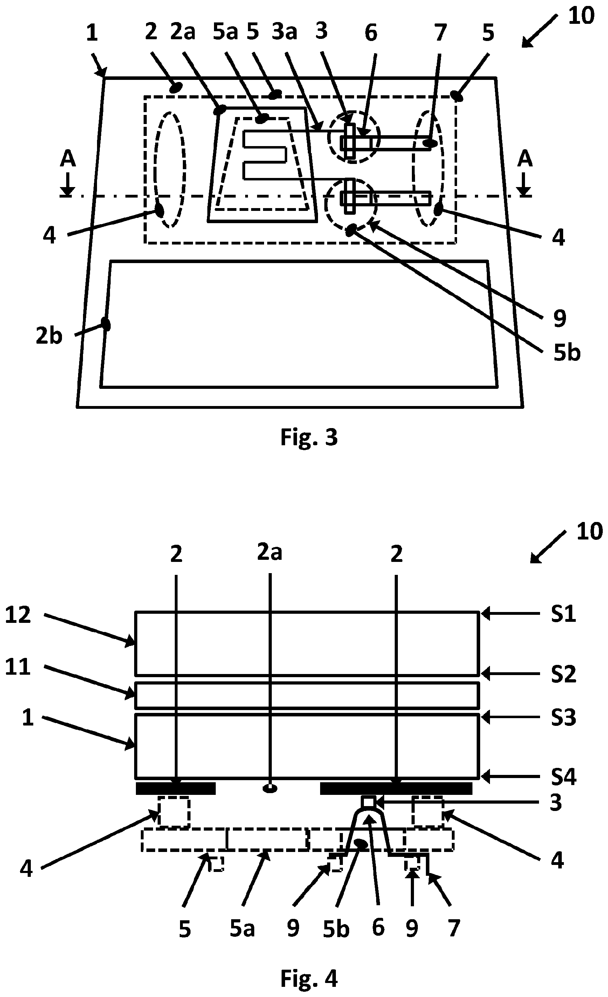

Fig. 3 discloses a glazing (10) according to the invention like Fig. 1 but further comprising a spring contact hole (5b) in the bracket (5) and a clip (9) for clipping the spring contact (6) or the connector (7) to the bracket (5). Advantageously, the spring contact hole (5b) allows visual inspection of alignment between the spring contact (6) and the contact pad (3) so the bracket (5) can be positioned quickly and accurately.

Fig. 4 discloses a cross-section on the line A-A of Fig. 3 of the glazing (10) according to the invention. The clip (9) can have a shape to match the spring contact hole (5b), such as a circle or ring. Alternatively, the clip (9) can be formed of a plurality of clips, such as two clips on opposite sides of the spring contact hole (5b).

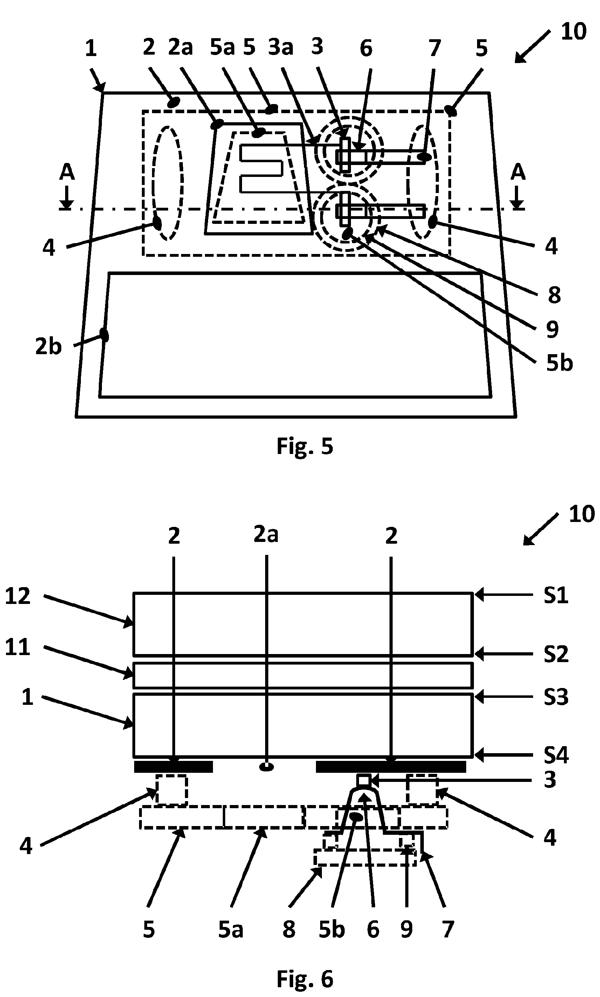

Fig. 5 discloses a glazing (10) according to the invention like Fig. 3 but further comprising a cap (8) covering the spring contact hole (5b) and the clip (9).

Fig. 6 discloses a cross-section on the line A-A of Fig. 5 of the glazing (10) according to the invention. The cap (8) can have a shape to match the spring contact hole (5b), such as a circle or ring. The cap (8) can secure the clip (9) of plurality of clips for example by a screw thread, lip or bayonet fastening formed on the sides of the spring contact hole (5b).

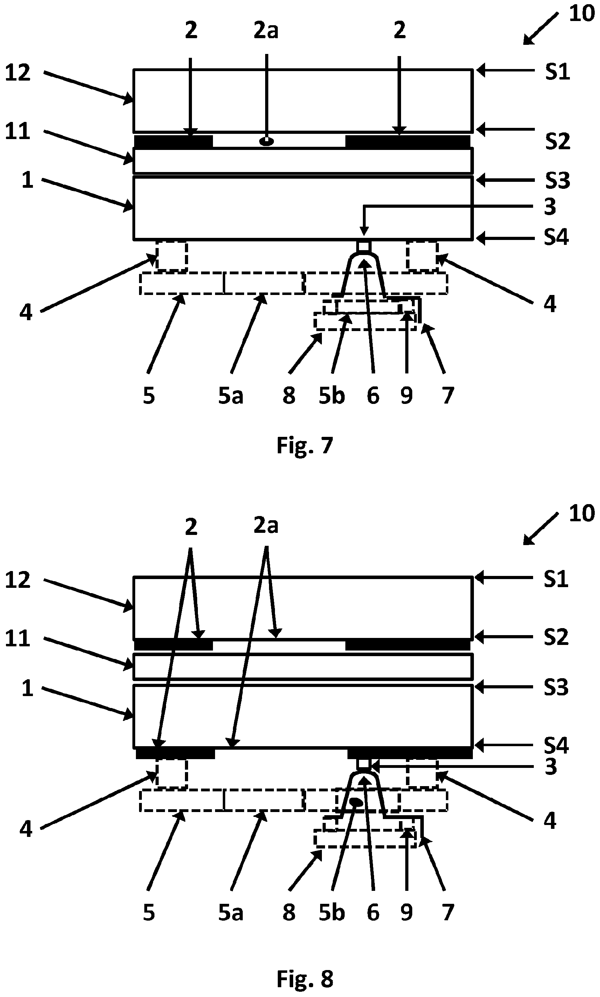

Fig. 7 discloses a cross-section on the line A-A of Fig. 5 of the glazing (10) according to the invention, but the print layer (2) is on a surface (S2) of the outer glass sheet (12).

Fig. 8 discloses a cross-section on the line A-A of Fig. 5 of the glazing (10) according to the invention, with a total of two print layers (2), one on a surface (S2) of the outer glass sheet (12) and the other on a surface (S4) of the inner glass sheet (1).

References in the drawings are as follows:
1 - Inner glass sheet
2 - Print layer
2a - Opening
2b - Larger opening
3 - Contact pad
3a - Heating element
4 - Adhesive layer
5 - Bracket
5a - Sensor hole
5b - Spring contact hole
6 - Spring contact
7 - Connector
8 - Cap
9 - Clip
10 - Glazing
11 - Ply of interlayer material
12 - Outer glass sheet
S1 - Surface 1
S2 - Surface 2
S3 - Surface 3
S4 - Surface 4

## Claims

1. A glazing (10) for a sensor, comprising:
- an inner glass sheet (1) for facing the sensor,
- a print layer (2) on part of a surface of the glazing (10),
- an opening (2a) in the print layer (2) for the sensor to sense via the glazing (10),
- a contact pad (3) on the inner glass sheet (1),
- a heating element (3a) for heating the opening (2a) electrically connected to the contact pad (3),
- an adhesive layer (4) bonded to a part of the inner glass sheet (1),
- a bracket (5) for the sensor bonded to the adhesive layer (4),
- a sensor hole (5a) in the bracket (5) for positioning the sensor,
**characterised by**
- a spring contact (6) biased against the contact pad (3) by the adhesive layer (4) and attached to a connector (7) for supplying electrical power from a power source wherein the spring contact (6) or the connector (7) is moulded in, or clipped to, the bracket (5).

2. A glazing (10) according to claim 1, further comprising an outer glass sheet (12) bonded to the inner glass sheet (1) by a ply of interlayer material (11).

3. A glazing (10) according to claim 1 or claim 2, wherein and the sensor hole (5a) at least partly overlaps the opening (2a) in the print layer (2).

4. A glazing (10) according to any preceding claim, wherein the heating element (3a) at least partly overlaps the opening (2a) in the print layer (2).

5. A glazing (10) according to any preceding claim, wherein the connector (7) at least partly overlaps the adhesive layer (4).

6. A glazing (10) according to any preceding claim, further comprising a spring contact hole (5b) in the bracket (5) for positioning the spring contact (6).

7. A glazing (10) according to claim 6, further comprising a cap (8) for covering the spring contact hole (5b).

8. A glazing (10) according to any preceding claim, further comprising a clip (9) for clipping the spring contact (6) to the bracket (5).

9. A glazing (10) according to any preceding claim, wherein the bracket (5) has thickness 6 mm or less, more preferably 4 mm or less, most preferably 2 mm or less.

10. A glazing (10) according to any preceding claim, wherein the heating element (3a) is selected from a conductive coating, conductive tracks, conductive wires, or a combination thereof.

11. A glazing (10) according to any preceding claim, wherein the heating element (3a) is conductive tracks comprising silver print, silver nanowires, carbon nanotubes, or graphene.

12. A glazing (10) according to any preceding claim, wherein power density in the heating element (3a) is in a range from 100 to 3,000 W/m², more preferably from 200 to 1,000 W/m², most preferably from 300 to 600 W/m².

13. A method for manufacturing a glazing (10) for a sensor according to claim 1, comprising steps:
- providing an inner glass sheet (1) for facing the sensor,
- printing a print layer (2) on a surface of the glazing (10),
- forming an opening (2a) in the print layer (2) for the sensor to sense via the glazing (10),
- printing a contact pad (3) on the inner glass sheet (1),
- forming a heating element (3a) for heating the opening (2a) electrically connected to the contact pad (3),
- bonding an adhesive layer (4) to a part of the inner glass sheet (1),
- bonding a bracket (5) for the sensor to the adhesive layer (4),
- forming a sensor hole (5a) in the bracket (5) for positioning the sensor,
- **characterised by** providing a spring contact (6) biased against the contact pad (3) by the adhesive layer (4) and attached to a connector (7) for supplying electrical power from a power source wherein the spring contact (6) or the connector (7) is moulded in, or clipped to, the bracket (5).

14. A method for manufacturing a glazing (10) according to claim 13, wherein the step of bonding the bracket (5) for the sensor to the adhesive layer (4) and the step of providing the spring contact (6) biased against the contact pad (3) by the adhesive layer (4) occur simultaneously.

15. Use of the glazing (10) according to claim 1 as a windshield, a rear window, a side window, or a roof window of a motor vehicle, for a sensor system to enable an autonomous vehicle or a vehicle with an advanced driver assistance system.

## Patentansprüche

1. Verglasung (10) für einen Sensor mit:
- einer inneren Glasscheibe (1) zum Abdecken des Sensors,
- einer Aufdruckschicht (2) auf einem Teil der Oberfläche der Verglasung (10),
- einer Öffnung (2a) in der Aufdruckschicht (2), damit der Sensor durch die Verglasung (10) hindurch messen kann,
- einer Kontaktfläche (3) auf der inneren Glasscheibe (1),
- einem Heizelement (3a) zum Beheizen der Öffnung (2a), das elektrisch mit der Kontaktfläche (3) verbunden ist,
- einer Klebeschicht (4), die mit einem Teil der inneren Glasscheibe (1) verbunden ist,
- einer Halterung (5) für den Sensor, die mit der Klebeschicht (4) verbunden ist,
- einem Sensorloch (5a) in der Halterung (5) zum Positionieren des Sensors,
**gekennzeichnet durch**
- einen Federkontakt (6), der durch die Klebeschicht (4) gegen die Kontaktfläche (3) vorgespannt ist und an einem Verbinder (7) zum Zuführen von elektrischer Energie aus einer Energiequelle befestigt ist, wobei der Federkontakt (6) oder der Verbinder (7) an die Halterung (5) angeformt oder an dieser angeklemmt ist.

2. Verglasung (10) nach Anspruch 1, ferner mit einer äußeren Glasscheibe (12), die durch eine Lage Zwischenmaterial (11) mit der inneren Glasscheibe (1) verbunden ist

3. Verglasung (10) nach Anspruch 1 oder Anspruch 2, bei der die Sensoröffnung (5a) zumindest teilweise mit der Öffnung (2a) in der Aufdruckschicht überlappt (2).

4. Verglasung (10) nach einem der vorstehenden Ansprüche, bei der das Heizelement (3a) zumindest teilweise mit der Öffnung (2a) in der Aufdruckschicht (2) überlappt.

5. Verglasung (10) nach einem der vorstehenden Ansprüche, bei der der Verbinder (7) zumindest teilweise mit der Klebeschicht (4) überlappt.

6. Verglasung (10) nach einem der vorstehenden Ansprüche, die ferner ein Federkontaktloch (5b) in der Halterung (5) zum Positionieren des Federkontakts (6) umfasst.

7. Verglasung (10) nach Anspruch 6, ferner mit einer Kappe (8) zum Abdecken des Federkontaktlochs (5b).

8. Verglasung (10) nach einem der vorstehenden Ansprüche, die ferner eine Klemme (9) zum Befestigen des Federkontakts (6) an der Halterung (5) umfasst.

9. Verglasung (10) nach einem der vorstehenden Ansprüche, wobei die Halterung (5) eine Dicke von 6 mm oder weniger, vorzugsweise 4 mm oder weniger, am bevorzugtesten 2 mm oder weniger aufweist.

10. Verglasung (10) nach einem der vorstehenden Ansprüche, bei der das Heizelement (3a) aus einer leitfähigen Beschichtung, leitfähigen Bahnen, leitfähigen Drähten oder einer Kombination davon ausgewählt ist.

11. Verglasung (10) nach einem der vorstehenden Ansprüche, bei der das Heizelement (3a) leitfähige Bahnen umfasst, die Silberdruck, Silbernanodrähte, Kohlenstoffnanoröhren oder Graphen umfassen.

12. Verglasung (10) nach einem der vorstehenden Ansprüche, bei der die Leistungsdichte im Heizelement (3a) in einem Bereich von 100 bis 3.000 W/m 2, vorzugsweise von 200 bis 1.000 W/m2, am besten von 300 bis 600 W/m2 liegt.

13. Verfahren zur Herstellung einer Verglasung (10) für einen Sensor gemäß Anspruch 1, mit den Schritten:
- Bereitstellen einer inneren Glasscheibe (1) zur Anbringung vor dem Sensor,
- Aufdrucken einer Aufdruckschicht (2) auf eine Oberfläche der Verglasung (10),
- Ausbilden einer Öffnung (2a) in der Aufdruckschicht (2, damit der Sensor durch die Verglasung (10) hindurch messen kann,
- Aufdrucken einer Kontaktfläche (3) auf die innere Glasscheibe (1),
- Ausbilden eines Heizelements (3a) zum Beheizen der Öffnung (2a), das elektrisch mit der Kontaktfläche (3) verbunden ist,
- Anbringen einer Klebeschicht (4) an einem Teil der inneren Glasscheibe (1),
- Anbringen einer Halterung (5) für den Sensor auf der Klebeschicht (4),
- Ausbilden einer Sensoröffnung (5a) in der Halterung (5) zum Positionieren des Sensors,
- **gekennzeichnet durch** Bereitstellen eines Federkontakts (6), der durch die Klebeschicht (4) gegen das Kontaktpad (3) vorgespannt ist und an einem Verbinder (7) zum Zuführen von elektrischer Energie aus einer Energiequelle befestigt ist, wobei der Federkontakt (6) oder der Verbinder (7) an die Halterung (5) angeformt oder an dieser befestigt ist.

14. Verfahren zum Herstellen einer Verglasung (10) nach Anspruch 13, bei dem der Schritt des Anbringens der Halterung (5) für den Sensor an der Klebeschicht (4) und der Schritt des Anbringens des durch die Klebeschicht (4) gegen das Kontaktpad (3) vorgespannten Federkontakts (6) gleichzeitig erfolgen.

15. Verwendung der Verglasung (10) nach Anspruch 1 als Windschutzscheibe, Heckscheibe, Seitenscheibe oder Dachfenster eines Kraftfahrzeugs für ein Sensorsystem, um ein autonomes Fahrzeug oder ein Fahrzeug mit einem fortschrittlichen Fahrerassistenzsystem zu ermöglichen.

## Revendications

1. Vitrage (10) pour un capteur, comprenant :
- une feuille de verre intérieure (1) destinée à faire face au capteur,
- une couche d'impression (2) sur une partie de la surface du vitrage (10),
- une ouverture (2a) dans la couche d'impression (2) pour permettre au capteur une détection à travers le vitrage (10),
- un plot de contact (3) sur la feuille de verre intérieure (1),
- un élément chauffant (3a) pour chauffer l'ouverture (2a), connecté électriquement au plot de contact (3),
- une couche adhésive (4) collée sur une partie de la feuille de verre intérieure (1),
- un support (5) pour le capteur, collé sur la couche adhésive (4),
- un trou de capteur (5a) dans le support (5) pour positionner le capteur, **caractérisé par**
- un contact à ressort (6) poussé contre le plot de contact (3) par la couche adhésive (4) et fixé à un connecteur (7) pour fournir de l'énergie électrique à partir d'une source d'alimentation, le contact à ressort (6) ou le connecteur (7) étant moulé dans le support (5) ou clipsé sur celui-ci.

2. Vitrage (10) selon la revendication 1,
comprenant en outre une feuille de verre extérieure (12) collée sur la feuille de verre intérieure (1) par une couche de matériau intercalaire (11).

3. Vitrage (10) selon la revendication 1 ou la revendication 2,
dans lequel le trou de capteur (5a) recouvre au moins partiellement l'ouverture (2a) dans la couche d'impression (2).

4. Vitrage (10) selon l'une des revendications précédentes,
dans lequel l'élément chauffant (3a) recouvre au moins partiellement l'ouverture (2a) dans la couche d'impression (2).

5. Vitrage (10) selon l'une des revendications précédentes,
dans lequel le connecteur (7) recouvre au moins partiellement la couche adhésive (4).

6. Vitrage (10) selon l'une des revendications précédentes,
comprenant en outre un trou de contact à ressort (5b) dans le support (5) pour positionner le contact à ressort (6).

7. Vitrage (10) selon la revendication 6,
comprenant en outre un capuchon (8) pour recouvrir le trou de contact à ressort (5b).

8. Vitrage (10) selon l'une des revendications précédentes,
comprenant en outre une pince (9) pour pincer le contact à ressort (6) sur le support (5).

9. Vitrage (10) selon l'une des revendications précédentes,
dans lequel le support (5) a une épaisseur de 6 mm ou moins, de préférence de 4 mm ou moins, et de préférence encore de 2 mm ou moins.

10. Vitrage (10) selon l'une des revendications précédentes,
dans lequel l'élément chauffant (3a) est choisi parmi un revêtement conducteur, des pistes conductrices, des fils conducteurs ou une combinaison de ceux-ci.

11. Vitrage (10) selon l'une des revendications précédentes,
dans lequel l'élément chauffant (3a) est constitué de pistes conductrices comprenant une impression d'argent, des nanofils d'argent, des nanotubes de carbone ou du graphène.

12. Vitrage (10) selon l'une des revendications précédentes,
dans lequel la densité de puissance dans l'élément chauffant (3a) est comprise dans une plage de 100 à 3 000 W/m² , de préférence de 200 à 1 000 W/m², et de préférence encore de 300 à 600 W/m².

13. Procédé de fabrication d'un vitrage (10) pour un capteur selon la revendication 1, comprenant les étapes consistant à :
- fournir une feuille de verre intérieure (1) destinée à faire face au capteur,
- imprimer une couche d'impression (2) sur une surface du vitrage (10),
- former une ouverture (2a) dans la couche d'impression (2) pour permettre au capteur une détection à travers le vitrage (10),
- imprimer un plot de contact (3) sur la feuille de verre intérieure (1),
- former un élément chauffant (3a) pour chauffer l'ouverture (2a), connecté électriquement au plot de contact (3),
- coller une couche adhésive (4) sur une partie de la feuille de verre intérieure (1),
- coller un support (5) pour le capteur sur la couche adhésive (4),
- former un trou de capteur (5a) dans le support (5) pour positionner le capteur,
**caractérisé par** l'étape consistant à :
- fournir un contact à ressort (6) poussé contre le plot de contact (3) par la couche adhésive (4) et fixé à un connecteur (7) pour fournir de l'énergie électrique à partir d'une source d'alimentation, le contact à ressort (6) ou le connecteur (7) étant moulé dans le support (5) ou clipsé sur celui-ci.

14. Procédé de fabrication d'un vitrage (10) selon la revendication 13, dans lequel l'étape consistant à coller le support (5) pour le capteur sur la couche adhésive (4) et l'étape consistant à fournir le contact à ressort (6) poussé contre le plot de contact (3) par la couche adhésive (4) se produisent simultanément.

15. Utilisation du vitrage (10) selon la revendication 1 comme pare-brise, lunette arrière, vitre latérale ou vitre de toit d'un véhicule à moteur, pour un système de capteurs afin de réaliser un véhicule autonome ou un véhicule équipé d'un système avancé d'aide à la conduite.
